# EUROPÄISCHE PATENTSCHRIFT

(11) **EP 0 670 110 B1**
(45) Veröffentlichungstag und Bekanntmachung des Hinweises auf die Patenterteilung: **27.05.1998**
(21) Anmeldenummer: 94117706.5
(22) Anmeldetag: 10.11.1994
(51) Int. Cl.: A01K 1/02, B65D 43/02

(54) **Geflügeltransportbehälter**
Transport container for poultry
Caisse de transport pour volailles

(30) Priorität: 02.03.1994 DE 9403487 U
(43) Veröffentlichungstag der Anmeldung: 06.09.1995
(73) Patentinhaber: Kunststoffabriek Coevorden B.V., NL-7741 LA Coevorden (NL)
(72) Erfinder: Jansen, Dirk, NL-7741 Coevorden (NL); Schumacher, Bernd, D-49849 Wilsum (DE)
(74) Vertreter: Schulze Horn, Stefan, Dipl.-Ing.

(56) Entgegenhaltungen:
- DE-A- 1 930 872
- FR-A- 1 381 518
- US-A- 3 407 961
- COEVORDEN 23.September 1992 XP 000319420

## Beschreibung

Die vorliegende Erfindung betrifft eine Transportkiste aus Kunststoff für lebende Kleintiere, insbesondere für Geflügel, nach dem Oberbegriff des Schutzanspruches 1.

Eine derartige Transportkiste ist aus der DE-PS 25 42 747 bekannt. Sie ist dadurch gekennzeichnet, daß in den Innenseiten der Verbindungsränder Stege derart angebracht sind, daß jeweils ein oberer Steg an einem unteren Steg anliegt, daß die Stapelelemente als umlaufende Stapelränder ausgebildet sind, und daß ein am Boden der unteren Kistenhälfte angebrachter Stapelrand in den Stapelrand am Boden der oberen Kistenhälfte einsetzbar ist, daß die vertikal verlaufenden Rippen am Oberrand des Stapelrandes auslaufen, und daß der Deckel ein zweigeteilter Schiebedeckel ist, wovon jeder Teil an den Seiten nach unten gerichtete Stege mit gepfeilten Hammerköpfen aufweist, die in einem Schlitz zwischen zwei am Boden angebrachten Stegen verschieblich sind.

Wenn sich auch die bekannte Transportkiste in der Praxis durchaus bewährt hat, insbesondere weil sie unempfindlich ist gegen die übliche rauhe Behandlung, weil sie stabil ist und weil sie stapelbar und besteigbar ist, so hat sich doch als nachteilig erwiesen, daß der zweigeteilte Schiebedeckel aufgrund seiner Konstruktion in der oberen Hälfte der Transportkiste nur eine relativ kleine Öffnung zum Einsetzen und Herausnehmen der Tiere freigeben kann.

Es ist die Aufgabe der vorliegenden Erfindung, die gattungsgemäße Transportkiste derart weiterzuentwickeln, daß die lebenden Kleintiere, insbesondere das Geflügel, einfacher und schneller und ohne Verletzungsgefahr für die Tiere einsetzbar und herausnehmbar sind.

Die Lösung der Aufgabe erfolgt mit einer Transportkiste nach dem Oberbegriff des Schutzanspruches 1, die dadurch gekennzeichnet ist, daß die Öffnung im Boden der oberen Kistenhälfte eine zumindest teilweise umlaufende Abstufung und gegenüberliegend jeweils mindestens eine Durchbrechung im Bereich der Abstufung aufweist, daß der Deckel als loser Deckel ausgebildet ist und daß der Deckel eine dem nach außen weisenden Rand der Abstufung entsprechende Kontur aufweist und gegenüberliegend an seinem Rand jeweils mindestens eine elastisch verformbare Zunge besitzt, die in die Durchbrechung im Bereich der Abstufung der Öffnung zur Befestigung des Deckels einschiebbar ist.

Dadurch wird vorteilhaft erreicht, daß eine große frei zugängliche Öffnung mit dem losen Deckel wahlweise verschließbar oder freigebbar ist und daß damit das Be- und Entladen insbesondere von Geflügel wesentlich tierfreundlicher ist als nach dem Stand der Technik.

Als weiterer Vorteil ergibt sich, daß die Transportkiste auch gut zum Einsatz in einer automatischen Hühnerfangmaschine geeignet ist.

Vorteilhaft ist vorgesehen, daß die Kontur des Deckels allgemein rechteckig mit abgerundeten Ecken ist und im Einbauzustand nahe am Stapelrand der oberen Kistenhälfte verläuft. Damit ist erreichbar, daß die Öffnung besonders groß ist, ohne daß die Stabilität der Transportkiste beeinträchtigt ist.

Um die Lüftung auch im Deckelbereich weiter zu erhöhen, wird vorgeschlagen, daß der Deckel eine Vielzahl von Öffnungen aufweist, wovon mindestens zwei gegenüberliegende Öffnungen als Grifföffnungen ausgebildet sind.

Um den Deckel besonders hinsichtlich seiner Steifigkeit zu verbessern, ist vorgesehen, daß der Deckel im Randbereich seiner Innenseite einen umlaufenden Verstärkungswulst aufweist, der im Einbauzustand des Deckels nahe dem Rand der Öffnung in der oberen Kistenhälfte verläuft.

Um eine weitere Verstärkung zu erreichen, weist der Deckel zweckmäßig an seiner Innenseite mindestens eine sich in Richtung von einer Zunge zur gegenüberliegenden Zunge erstreckenden Verstärkungsrippe auf.

Zur Erleichterung der Handhabbarkeit weist zumindest die obere Kistenhälfte zweckmäßig in zwei gegenüberliegenden Wänden jeweils mindestens ein Griffloch auf und weitere Lüftungsöffnungen sind im Boden der oberen Kistenhälfte angebracht, um eine optimale Luftzufuhr zu gewährleisten.

Die Befestigungselemente in den umlaufenden Verbindungsrändern sind wie an sich bekannt beispielsweise Kunststoffnieten mit einem geschlitzten Schaft und einer Spitze, die einen Widerhaken trägt.

Im Boden der unteren Kistenhälfte sind zweckmäßig verstärkende Sicken und Öffnungen vorgesehen, um bei der Reinigung das Reinigungsfluid ablaufen lassen zu können.

Eine bevorzugte Ausgestaltung der erfindungsgemäßen Transportkiste wird nunmehr anhand einer Zeichnung näher beschrieben. Sie zeigt in
- Figur 1: eine vereinfachte perspektivische Darstellung, in
- Figur 2: eine Draufsicht auf die Unterseite des Deckels der Transportkiste und in
- Figur 3: eine Einzelheit bei A in Figur 1 in teilweise geschnittener Darstellung mit einer eingeschobenen Zunge des Deckels.

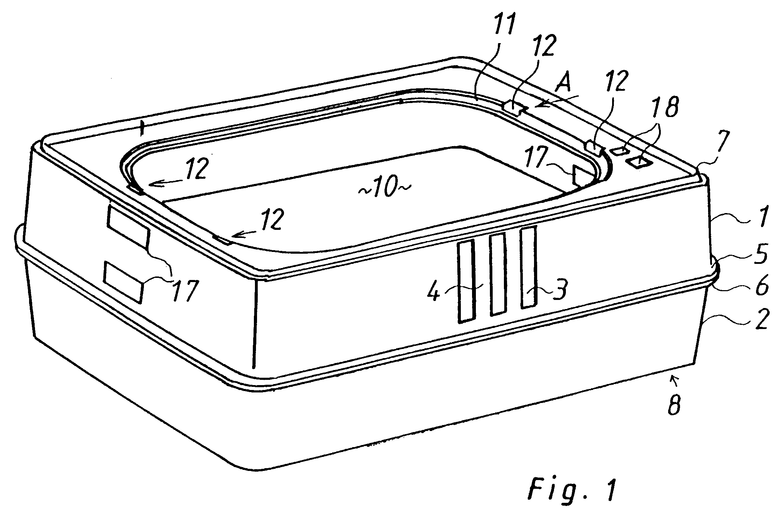

Mit Bezugnahme auf Figur 1 weist eine Transportkiste eine obere Kistenhälfte 1 und eine untere Kistenhälfte 2 auf, die mittels Verbindungsrändern 5 und 6 deckungsgleich aufeinandersetzbar sind. In diese Verbindungsränder 5 und 6 werden Befestigungselemente eingebracht, die nicht dargestellt sind. Sie können geschlitzte Kunststoffnieten sein, die durch entsprechende fluchtende Bohrungen hindurchsteckbar sind, wie dies an sich bekannt ist.

Die obere Kistenhälfte 1 weist auf ihrem in der Figur 1 nach oben weisenden Boden einen umlaufenden Stapelrand 7 auf, dem in seiner Formgebung ein Stapelrand 8 auf der unteren Kistenhälfte 2 insoweit entspricht, als beim Übereinanderstapeln zweier dieser Transportkisten der Stapelrand 8 der oberen Kiste in den Stapelrand 7 der darunter liegenden Kiste hineinpaßt, um ein seitliches Verschieben der gestapelten Kisten relativ zueinander zu verhindern.

Die obere Kistenhälfte 1 weist an ihren Seitenwänden eine Vielzahl von Öffnungen 3 mit dazwischen liegenden Rippen 4 auf, wobei zur Vereinfachung der Zeichnung nur einige wenige dargestellt sind. Die Öffnungen 3 und somit die Rippen 4 erstrecken sich im wesentlichen vertikal durch die Seitenwände.

An den Schmalseiten der oberen Kistenhälfte 4, die einen allgemein rechteckigen Umriß aufweist, befinden sich jeweils zwei übereinander angeordnete Grifflöcher 17. Auch neben den Grifflöchern 17 sind nicht dargestellte Öffnungen vorhanden, die eine von den Öffnungen 3 abweichende Kontur haben können.

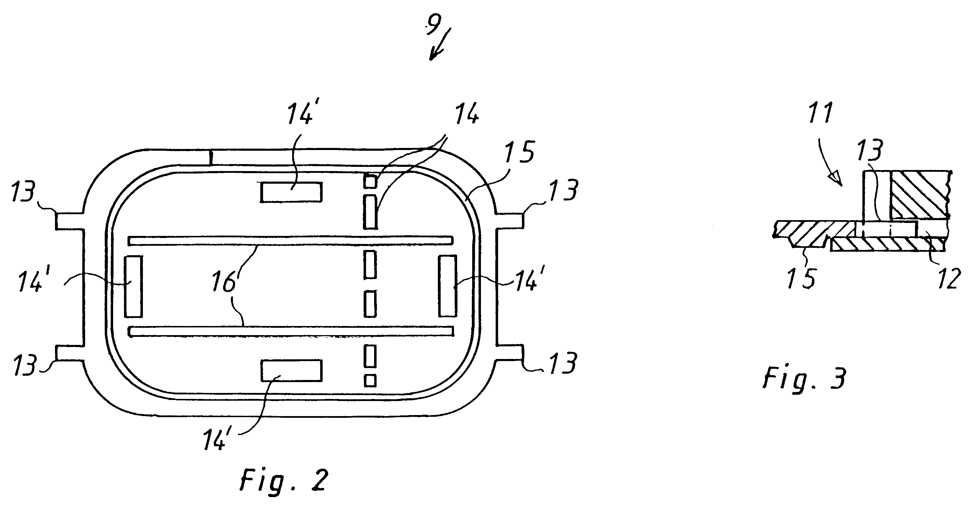

In dem Boden der oberen Kistenhälfte 1, der in der Figur 1 nach oben weist, ist eine Öffnung 10 ausgespart, die, soweit es aus statischen Gründen möglich ist, an den Stapelrand 7 herangeführt ist. Die Öffnung 10 hat einen allgemein rechteckigen Umriß mit abgerundeten Ecken und weist umlaufend eine Abstufung 11 auf, in die ein in Figur 2 gezeigter Deckel 9 mit seinem Außenumriß einlegbar und festlegbar ist. An den beiden Schmalseiten der Öffnung 10 sind im Bereich der Abstufung 11 jeweils zwei Durchbrechungen 12 angebracht, deren Bedeutung später erläutert wird.

Im Bereich zwischen der Öffnung 10 und dem Stapelrand 7 sind weitere Lüftungsöffnungen 18 angebracht, von denen beispielhaft nur zwei dargestellt sind.

Mit Bezugnahme auf Figur 2 weist der Deckel 9, der allgemein Rechteckform mit abgerundeten Ecken aufweist, an seinen Schmalseiten jeweils zwei beabstandet angeordnete Zungen 13 auf, die einen allgemein rechteckigen Umriß aufweisen. Der Deckel 9 und die mit diesem einstückigen Zungen 13 sind aus Kunststoff gefertigt. Der Deckel 9 und die Zungen 13 haben eine Dicke, die eine elastische Verformbarkeit, insbesondere eine Wölbung oder Biegung des Deckels derart ermöglicht, daß die Zungen 13 beim Einsetzen des Deckels 9 in die Öffnung 10 in die Durchbrechungen 12 einschiebbar sind und dann nach Rückstellung des Deckels diesen gegen Herausfallen sichern.

Weiter weist der Deckel 9 auf der in Figur 2 gezeigten Unterseite einen umlaufenden Verstärkungswulst 15 auf, der gleichmäßig beabstandet von der Außenkontur des Deckels verläuft. Parallel zu den Längsseiten des Deckels 9 verlaufen zwei Verstärkungsrippen 16, die einstückig mit dem Deckel 9 ausgeführt sind.

Jeweils etwa in der Mitte der Seiten weist der Deckel 9 eine Grifföffnung 14' auf. Die verbleibende Fläche des Deckels 9 ist mit einer Vielzahl von Öffnungen 14 versehen, von denen nur beispielhaft eine Reihe dargestellt ist. Die Öffnungen 14 dienen der Belüftung.

Figur 3 zeigt bei A in Figur 1 eine Einzelheit teilweise im Schnitt in vergrößerter Darstellung, wobei ein Teil des Deckels 9 mit dem Verstärkungswulst 15 und einer der daran angebrachten Zungen 13 erkennbar ist, die durch die Durchbrechung 12 des Bodens der oberen Kistenhälfte 1 ragt.

## Patentansprüche

1. Transportkiste aus Kunststoff für lebende Kleintiere, insbesondere für Geflügel, die aus zwei horizontal zusammensetzbaren Kistenhälften (1, 2) besteht, deren Wände zwischen vertikalen Öffnungen (3) vertikal verlaufende Rippen (4) aufweisen, wobei umlaufende Verbindungsränder (5, 6) der oberen und unteren Kistenhälfte (1, 2) durch Befestigungselemente zusammenhaltbar sind, an den Böden der Kistenhälften (1, 2) nach innen leicht konisch zulaufende, umlaufende Stapelränder (7, 8) vorgesehen sind, wobei der am Boden der unteren Kistenhälfte (2) angebrachte Stapelrand (8) in den Stapelrand am Boden der oberen Kistenhälfte (1) einsetzbar ist, und wobei der Boden der oberen Kistenhälfte (1) eine durch einen Deckel (9) verschließbare Öffnung (10) aufweist,
**dadurch gekennzeichnet,**
daß die Öffnung (10) im Boden der oberen Kistenhälfte (1) eine zumindest teilweise umlaufende Abstufung (11) und gegenüberliegend jeweils mindestens eine Durchbrechung (12) im Bereich der Abstufung (11) aufweist, daß der Deckel (9) als loser Deckel ausgebildet ist und daß der Deckel (9) eine dem nach außen weisenden Rand der Abstufung (11) entsprechende Kontur aufweist und gegenüberliegend an seinem Rand jeweils mindestens eine elastisch verformbare Zunge (13) besitzt, die in die Durchbrechung (12) im Bereich der Abstufung der Öffnung (10) zur Befestigung des Deckels (9) einschiebbar ist.

2. Transportkiste nach Anspruch 1, dadurch gekennzeichnet, daß die Kontur des Deckels (9) allgemein rechteckig mit abgerundeten Ecken ist und im Einbauzustand nahe am Stapelrand (7) der oberen Kistenhälfte (1) verläuft.

3. Transportkiste nach Anspruch 1 oder 2, dadurch gekennzeichnet, daß der Deckel (9) eine Vielzahl von Öffnungen (14) aufweist, wovon mindestens zwei gegenüberliegende Öffnungen als Grifföffnungen (14') ausgebildet sind.

4. Transportkiste nach einem der Ansprüche 1 bis 3, dadurch gekennzeichnet, daß der Deckel (9) im Randbereich seiner Innenseite einen umlaufenden Verstärkungswulst (15) aufweist, der im Einbauzustand des Deckels (9) nahe dem Rand der Öffnung (10) in der oberen Kistenhälfte (1) verläuft.

5. Transportkiste nach einem der vorangegangenen Ansprüche, dadurch gekennzeichnet, daß der Deckel (9) an seiner Innenseite mindestens eine sich in Richtung von einer Zunge (13) zur gegenüberliegenden Zunge (13) erstreckende Verstärkungsrippe (16) aufweist.

6. Transportkiste nach einem der vorangegangenen Ansprüche, dadurch gekennzeichnet, daß zumindest die obere Kistenhälfte (1) in zwei gegenüberliegenden Wänden jeweils mindestens ein Griffloch (17) aufweist und weitere Lüftungsöffnungen (18) im Boden der oberen Kistenhälfte (1) angebracht sind.

## Claims

1. Transport container of plastic material for living small animals, in particular for poultry, consisting of two container halfs (1, 2) to be horizontally mounted whose walls comprise ribs (4) extending vertically between vertical apertures (3) wherein continuous connection boarders (5, 6) of the upper and lower container half (1, 2) are to be connected by fastening elements, and at the bottoms of the container halfs (1, 2) continuous stacking boarders (7, 8) are provided which extend slightly conical inwards wherein the stacking boarder (8) positioned at the bottom of the lower container half (2) is to be inserted into the stacking boarder at the bottom of the upper container half (1), and wherein the bottom of the upper container half (1) comprises an aperture (10) to be closed by a lid (9),
**characterized in**
that the opening (10) in the bottom of the upper container half (1) comprises an at least partially extending step (11), and opposite thereto at least one aperture (12) in eaach area of the step (11), that the lid (9) is designed as a loose lid, and that the lid (9) comprises a contour corresponding with the outwards projecting boarder of the step (11), and opposite thereto comprises at the boarder thereof at least one resiliently deformable tongue (13) to be pushed into the aperture (12) in the area of the step of the aperture (10) for fastening the lid (9).

2. Transport container according to claim 1, characterized in that the contour of the lid (9) is generally rectangular with rounded corners, and when mounted extends adjacent to the stacking boarder (7) of the upper container half (1).

3. Transport container according to claim 1 or 2, characterized in that the lid (9) comprises a plurality of apertures (14) at least two opposite ones of them being designed as handling apertures (14').

4. Transport container according to one of the claims 1 to 3, characterized in that the lid (9) at the boarder area of the inner side thereof comprises a continuous reinforcing swelling (15) extending close to the boarder of the aperture (10) in the upper container half (1) when the lid (9) is mounted.

5. Transport container according to one of the preceeding claims, characterized in that the lid (9) at the inner side thereof comprises at least one reinforcing rib (16) extending in the direction from one tongue (13) to the opposite tongue (13).

6. Transport container according to one of the preceeding claims, characterized in that at least the upper container half (1) at each of the two opposite walls comprises at least one handling aperture (17), and that further venting apertures (18) are positioned in the bottom of the upper container half (1).

## Revendications

1. Caisse de transport en matière plastique pour petits animaux vivants, en particulier pour volailles, qui est constituée par deux moitiés de caisse (1, 2) pouvant être assemblées horizontalement, dont les parois entre des ouvertures verticales (3) présentent des nervures (4) dans le sens vertical, des bords de jonction (5, 6) périphériques de la moitié de caisse supérieure et de la moitié de caisse inférieure (1, 2) pouvant être maintenus ensemble par des éléments de fixation, des bords d'empilage (7, 8) périphériques, légèrement coniques vers l'intérieur étant prévus sur les fonds des moitiés de caisse (1, 2), le bord d'empilage (8) fixé sur le fond de la moitié de caisse inférieure (2) pouvant être inséré dans le bord d'empilage sur le fond de la moitié de caisse supérieure (1), et le fond de la moitié de caisse supérieure (1) présentant une ouverture (10) pouvant être fermée par un couvercle (9),
caractérisée en ce
que l'ouverture (10) dans le fond de la moitié de caisse supérieure (1) présente un échelonnement (11) tout au moins partiellement périphérique et, en face, respectivement au moins une découpure (12) dans la zone de l'échelonnement (11), que le couvercle (9) est configuré comme couvercle amovible et que le couvercle (9) présente des contours qui correspoondent au bord tourné vers l'extérieur de l'échelonnement (11) et possède, en face sur son bord, respectivement au moins une languette déformable élastiquement (13) qui peut être inséré par glissement dans la découpure (12) dans la zone de l'échelonnement de l'ouverture (10) pour fixer le couvercle (9).

2. Caisse de transport selon la revendication 1, caractérisée en ce que les contours du couvercle (9) sont rectangulaires de manière générale avec des coins arrondis et se situent, à l'état monté, près du bord d'empilage (7) de la moitié de caisse supérieure (1).

3. Caisse de transport selon la revendication 1 ou 2, caractérisée en ce que le couvercle (9) présente une multitude d'ouvertures (14) parmi lesquelles au moins deux ouvertures opposées sont configurées comme ouvertures de poignées (14').

4. Caisse de transport selon l'une des revendications 1 à 3, caractérisée en ce que le couvercle (9) présente, dans la zone du bord de son côté intérieur, un bourrelet de renforcement périphérique (15) qui, lorsque le couvercle (9) est à l'état monté, se situe près du bord de l'ouverture (10) dans la moitié de caisse supérieure (1).

5. Caisse de transport selon l'une des revendications précédentes, caractérisée en ce que le couvercle (9) présente, sur son côté intérieur, au moins une nervure de renforcement (16) qui s'étend en direction d'une languette (13) vers la languette opposée (13).

6. Caisse de transport selon l'une des revendications précédentes, caractérisée en ce qu'au moins la moitié de caisse supérieure (1) présente, dans deux parois opposées, respectivement au moins un trou de poignée (17) et d'autres ouvertures d'aération (18) sont ménagées dans le fond de la moitié de caisse supérieure (1).
